# EUROPEAN PATENT SPECIFICATION

(11) **EP 0 522 238 B1**
(45) Date of publication and mention of the grant of the patent: **11.05.1994**
(21) Application number: 92104143.0
(22) Date of filing: 11.03.1992
(51) Int. Cl.: A23N 1/02, A23N 15/02, A23N 4/10

(54) **Machine for separating the seeds of grapes and similar fruits from the skin**
Maschine zur Trennung von Kernen von Trauben oder ähnlichen Früchten von der Haut
Machine pour séparer les pépins des raisins et fruits similaires de la peau

(30) Priority: 03.07.1991 IT MI911826
(43) Date of publication of application: 13.01.1993
(73) Proprietor: Tommaselli, Roberto, I-65100 Pescara (PE) (IT)
(72) Inventor: Tommaselli, Roberto, I-65100 Pescara (PE) (IT)
(74) Representative: Giambrocono, Alfonso, Dr. Ing.

(56) References cited:
- FR-A- 792 089
- FR-A- 2 661 130
- US-A- 3 036 613
- US-A- 3 747 514
- US-A- 3 978 237
- US-A- 4 177 722

## Description

The present invention relates to a machine suited for separating from the pulp and from the skin the seeds of preferably broken grapes (and of similar fruits) from which the stalks have previously been removed.

For the preparation of fruit preserves, jams, confectionery and other food products, both in small work-shops and in the alimentary preserve industry, grapes are used that are to be seedless; moreover, it is known that for the organoleptic qualities of the finished product to be best maintained, the physical integrity of the union of the skin with the pulp should be maintained as much as possible. At present, the separation of the seeds from the skin-adherent pulp of the grapes is carried out manually, with a very low productivity and very high costs.

Several kinds of machines are known for mechanically treating fruits, in particular grapes.
The FR-A-792089 and the FR-A-2661130 disclose machines having parallel facing counter-rotating cylinders upon which the fruits are loaded: the distance between the cylinders is such that the fruits passing through them are pressed or squeezed and finally damaged, so that seeds, juice and some portions of the pulp of the fruit together with its relevant skin are collected under said cylinders.
The US-A-4177722 shows an apparatus having a very complicate structure, suitable for the continuous separation of the pulp of grapes from their seeds and skins.

The same considerations as above apply also to other pulp-and-seed fruits than grapes.

The main object of the present invention is to provide a machine that is suited to automatically separate with high performance the seeds from the pulp and skin of preferably broken grapes separated from the stalks (and of other similar fruits), thereby assuring that the integrity of pulp and skin is essentially maintained, even when said grapes are treated after over-ripening or freezing and thawing.

A further object is to provide a versatile machine, that is a machine that can be easily adapted to the separation of seeds of various size, according to the different variety of the same kind of fruit treated or to the different kind of fruit the seeds are to be eliminated from.

These and other objects are achieved with a machine according to Claim 1.

The ribs can project from only one or both of the shafts of a shaft couple: in such a case, the design of the ribs of one shaft should be the opposite of that of the ribs of the other shafts.

The ribs may be discontinuous, or may span only part of the length of the shaft they project from, or they may span the whole length of the shaft, and may be single-threaded or multi-threaded; if the ribs are continuous and are provided on both shafts of a shaft couple, the shape of the ribs of one shaft is preferably complementary to the room delimited in front of them by two consecutive turns of the rib projecting from the other shaft and within which the first rib extends.

Finally, the shafts of the shaft couple are mounted on the rigid structure in such a way that the distance between their axes can be changed, thereby making it possible to separate the seeds from the pulp of fruits of different variety, quality or kind.

In the present description, "seeds" of the treated fruits refers to both the case in which the solid or stiff or woody part forming said seeds is completely free of the fruit pulp, and to the case in which said solid part is covered with a more or less thin jelly-like pulp layer that is detached (as it often occurs when the fruits consists of grapes, especially small-size or unripe grapes) from the pulp of the fruits that are treated with the machine; therefore, under "treated pulp and/or skin" mainly the whole of the intact skin with an appreciable layer of pulp adhering thereto is to be intended.

In order of making the comprehension of the structure and features of the machine clearer, a few embodiments shall now be described, said embodiments being to be intended as merely illustrative and non-limiting, with reference to the enclosed drawings, in which:
- figure 1 is a diagrammatic partial representation of a top-planview of a first embodiment of the machine, the feeding hopper having been removed for the single shaft couple of the machine to be completely visible;
- figure 2 is a diagrammatic partial sectional view of the machine, taken along line 2-2 in figure 1,
- figures 3 to 5 are diagrammatic representations of top-planviews onto three different embodiments of the machine,
- figure 6 is a partial perspective view of the machine of figure 4, to the shafts of which a device is superposed that is suited to squeeze the fruits while still on the trees.

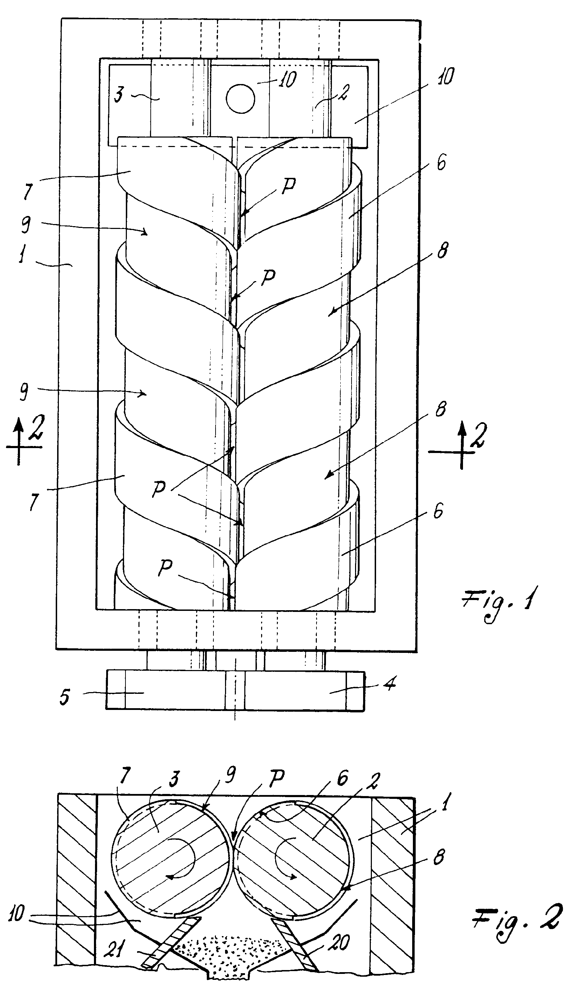

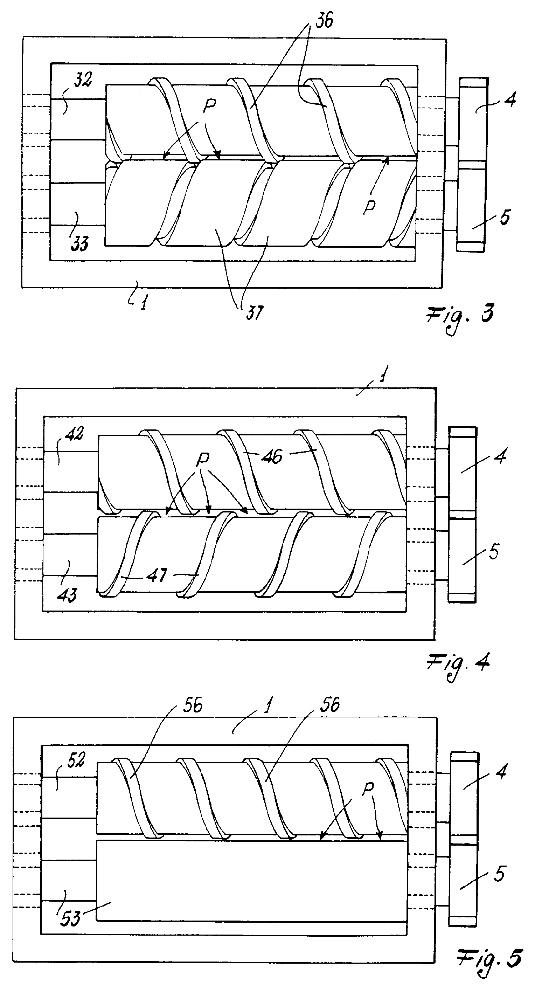

The machine shown in figure 1 and 2 comprises a rigid structure 1 that carries a couple of shafts 2, 3 that are parallel to one another, said shafts being rotatably mounted on bearings or the like (not shown in the drawing) in which the two shafts can rotate in opposite directions and are driven to rotate at the same speed by a couple of gear wheels 4 and 5 that engage into one another and are driven by a motor, not shown for the sake of evidence. It is clear that the shafts can be connected to one another, instead of by means of said gear wheels, by means of a chain engaging on sprocket wheels keyed to the axes of the two shafts, or by any other means that is suited to cause the two shafts to synchronously counter-rotate.

On each shaft 2, 3 a continuous, spiral-shaped rib 6 and 7, respectively, projects, said ribs spanning the shaft and defining a groove 8 and 9, respectively, said grooves 8 and 9 being obviously spiral-shaped too.

As can be seen from figure 1, the ribs and grooves of one shaft are inversely and symmetrically designed relative to the ones on the other shaft, and the profile of the ribs of one shaft has essentially the same shape and size of the opposite profile of the grooves on the other shaft, the grooves being therefore possibly considered as the mark of the profile of the opposite ribs, in which said ribs extend, as can be clearly seen from the figure.

In the embodiment shown, from each shaft there projects a spiral-shaped, single-threaded, constant-pitch rib with rectangular cross-section: it is clear that from each shaft spiral-shaped, multi-threaded ribs can project, that the pitch of the ribs can change along the shaft, and that the section of the ribs can be different from the rectangular one, for example it can be trapezoidal.

The two shafts 2, 3 of the subject couple are arranged near to one another for the ribs of each shaft to partially enter the corresponding grooves of the other shaft and define a passage consisting of successive openings P arranged in a staggered fashion between the two shafts 2, 3.

The upper ends in figure 1 of the shafts 2, 3 are free of ribs and thinner, both to the purpose of providing a free space through which the seeds that have been separated from the pulp of the fruits fall into a collecting hopper 10 (instead of a single hopper 10, several hoppers can possibly be provided, said hoppers been located also in intermediate points on the length of the shafts, the shafts being obviously thinner in said points) and to allow said thinner parts to be coupled in suitable holes (not shown for simplicity in the drawing) with bushings inbetween, said holes being provided in the structure 1: the support bushings of one of shafts 2, 3 are preferably eccentric in order of easily changing the distance between the two shafts according to the nature, size and quality of the fruits to be treated. Said structure is well-known per se and widely used and therefore it is not described herein, as it is not necessary for the comprehension of the present invention.

During the operation of the machine, which simply consists of transmitting a synchronous, continuous, opposite rotary motion to shafts 2, 3, from a hopper (not shown in figure 1 to allow the two shafts to be completely seen) grapes, that have previously been detached from and freed of the stalk, and squeezed to break them, are discharged onto the shafts, said hopper being located above the lower (as shown in figure 1) ends of the two shafts and nearly contacting the external surfaces of ribs 6, 7.

Said grapes, due to the rotation of the two shafts, are conveyed between the two shafts towards the other end of said shafts: the intact skin with most of the pulp adhering are caught and dragged between the two shafts and pass with no difficulty between the openings P provided between the two shafts, thereby falling into a container or collection device located underneath. The grape seeds, that are solid and have an average size greater than the width of openings P, cannot pass through said gaps but, the seeds being covered by a thin layer or film of jelly-like pulp, slip on the surfaces of the two shafts under the push of their ribs and, said openings being longitudinally displaced towards the upper end (in figure 1) of the shafts as a consequence of the combined effect of the rotation of the shafts with their ribs, said seeds, pushed by the flanks of the ribs, after the exit of the loading hopper, run along the whole length of the shafts until they fall into the seed collection hopper 10; preferably, under-neath the two shafts, two longitudinal doctor blades 20, 21 are provided, said doctor baldes 20, 21 contacting the outer surfaces of the ribs and providing for the parts of pulp and skin that might adhere thereto to be removed.

In the embodiment of figure 1, the ribs projecting from the two shafts and the grooves defined by said ribs are reciprocally symmetric and have the same size.

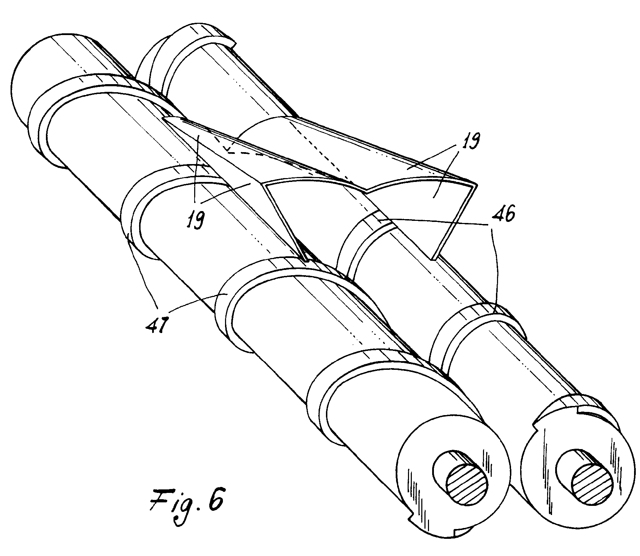

In figure 3, that is similar to figure 1 and in which like reference numerals are used to indicate structural parts that are the same as those shown in figure 1 (the same applies also for figures 4 and 5) there is diagrammatically shown a machine comprising a couple of shafts 32, 33 from which continuous ribs 36 and 37, respectively, projects, said ribs being oppositely designed; also in this case, the spiral-shaped groove defined by one of the ribs has the same width as the rib projecting from the other shaft into said groove. It can be seen, however, that the width of ribs 36 is much lower than that of ribs 37.

Likewise, from the shafts 42 and 43 of the couple of shafts of the machine diagrammatically shown in figure 4 continuous oppositely designed ribs 46 and 47, respectively, project, but in this case the width of the ribs is much lower than their pitch, as can be clearly seen from the drawing; the ribs can be removed from the opposite surfaces of the grooves, as in figure 4, or in these further grooves can be formed, their profiles having such shapes and sizes as to allow said ribs (obviously having a greater height than those shown in figure 4) to partially enter them.

Finally, in figure 5 there is diagrammatically shown the case in which only shaft 52 is provided with continuous ribs 56, no rib projecting from shaft 53; also with this structure, the shaft couple has exhibited great effectiveness in separating the seeds from the pulp and skin of the treated fruits.

We shall now turn to figure 6, in which for the sake of simplicity only the two opposite shafts of any of the machine of figures 1 to 5 have been shown. In particular, the two shafts are those of figure 4, and therefore the same numerals 46, 47 already used in said figure 4 have been used to indicate the ribs of the two shafts.

Above the two shafts at least a cross-doctor blade 19 is provided, said doctor blade 19 being adjustable above the seed sliding line and forming the end part of the charging hooper (not shown for simplicity) for the fruits to be treated with the machine, the purpose of said doctor blade 19 being essentially of squeezing the fruits, even if intact, that, dragged by ribs 46, 47, pass between the doctor blade and the couple of counter rotating shafts.

The purpose of doctor blade 19 is then also to help separating the pulp from close to the seeds of the treated fruits.

Doctor blades similar to the one shown in figure 6 can be advantageously provided in all the machine shown in figures 1 to 5.

In the embodiments shown in the drawings, the two shafts of each shaft couple have the same diameter, but the shafts can clearly have diameters different from one another; moreover, the ribs projecting from one or both of the shafts of the couple can be discontinuous, instead of being continuous.

It is also clear that the machine can comprise only one shaft couple, like in the above description, but it should be evident that the machine can comprise two or more shaft couples according to the production needs, said couples being more or less closely arranged to one another and connected by means of gear wheels or sprocket wheels and chains in order to synchronize the rotary motion of all the shaft couples: such a multiple machine can even be provided with one feeding hopper, said hopper being provided with chutes over the areas where the shafts of each shaft couple are close to one another.

## Claims

1. A machine for separating from the pulp the seeds of broken grapes and other fruits, comprising a rigid structure (1) carrying at least a couple of rotary shafts (2,3;32,33;42,43;52,53), said shafts being essentially parallel to one another, members (4,5) for causing said shafts (2,3;32,33;42,43;52,53) to rotate opposite to one another, a hopper or the like for feeding onto said shaft couple grapes or similar fruits; a device (10) for the discharge of the separated seeds; a device for collecting the skin and pulp of the fruits, said device being arranged underside of said shaft couple (2,3;32,33;42,43;52,53), at least one spiral-shaped rib (6,7;36,37;46,47;56) projecting from at least part of the length of at least one of the shafts of the shaft couple, whereby the opposite surfaces of said two shafts delimit at least one opening (P), the opening(s) (P) being of a width such that the seeds just cannot pass through to allow only the pulp with the skin of the treated fruits to pass through and to discharge the separated seeds at one end of said couple of shafts (2,33;32,33;42,43;52,53) by the rotation of the shafts.

2. A machine as claimed in claim 1, characterized in that said rib (6,7;36,37;46,47;56) essentially spans the whole length of the shaft (2,3;32,33;42,43;52) it projects from.

3. A machine as claimed in claims 1 and 2, characterized in that each of the shafts of said shaft couple (2,3;32,33;42,43) is provided with at least one of said ribs (6,7;36,37;46,47), the rib (6,36,46) of one shaft of the couple being oppositely designed relative to the one (7,37,47) on the other shaft.

4. A machine as claimed in claim 3, characterized in that the shape of the rib (6,36,46) of one shaft (2,32,42) is essentially complementary of the space defined between two successive turns of the rib (7,37,47) projecting from the other shaft (3,33,43) , in which said rib projects.

## Patentansprüche

1. Eine Maschine zum Trennen der Kerne von dem Fruchtfleisch von aufgebrochenen Weintrauben und anderen Früchten, umfassend eine starre Struktur (1), die wenigstens zwei drehbare Wellen (2, 3; 32, 33; 42, 43; 52, 53) trägt, wobei die Wellen im wesentlichen parallel zueinander sind, Teile (4, 5) zum Bewirken, daß sich die Wellen (2, 3; 32, 33; 42, 43; 52, 53) entgegengesetzt zueinander drehen, einen Trichter o.dgl. zum Zuführen von Weintrauben oder ähnlichen Früchten auf das Wellenpaar; eine Einrichtung (10) für das Entladen der abgetrennten Kerne; eine Einrichtung für das Sammeln der Haut und des Fruchtfleischs der Früchte, wobei die Einrichtung auf der Unterseite des Wellenpaars (2, 3; 32, 33; 42, 43; 52, 53) angeordnet ist, wenigstens eine spiralförmige Rippe (6, 7; 36, 37; 46, 47; 56), die von wenigstens einem Teil der Länge von wenigstens einer der Wellen des Wellenpaars vorsteht, wodurch die gegenüberliegenden Oberflächen der beiden Wellen wenigstens eine Öffnung (P) begrenzen, wobei die Öffnung(en) (P) von einer solchen Weite ist (sind), daß die Kerne gerade nicht hindurchgehen können, um es nur dem Fruchtfleisch mit der Haut der behandelten Früchte zu ermöglichen, hindurchzugehen und um die abgetrennten Kerne an einem Ende des Wellenpaars (2, 33; 32, 33; 42, 43; 52, 53) durch die Drehung der Wellen zu entladen.

2. Eine Maschine, wie in Anspruch 1 beansprucht, dadurch **gekennzeichnet**, daß die Rippe (6, 7; 36, 37; 46, 47; 56) im wesentlichen die gesamte Länge der Welle (2, 3; 32, 33; 42, 43; 52), von welcher sie vorsteht, überspannt.

3. Eine Maschine, wie in Ansprüchen 1 und 2 beansprucht, dadurch **gekennzeichnet**, daß jede der Wellen des Wellenpaars (2, 3; 32, 33; 42, 43) mit wenigstens einer der Rippen (6, 7; 36, 37; 46, 47) versehen ist, wobei die Rippe (6, 36, 46) von einer Welle des Paars entgegengesetzt relativ zu der anderen (7, 37, 47) auf der anderen Welle ausgebildet ist.

4. Eine Maschine, wie in Anspruch 3 beansprucht, dadurch **gekennzeichnet**, daß die Form der Rippe (6, 36, 46) von einer Welle (2, 32, 42) im wesentlichen komplementär zu dem Raum ist, welcher zwischen zwei aufeinanderfolgenden Windungen der Rippe (7, 37, 47), die von der anderen Welle (3, 33, 43) vorsteht, begrenzt ist, in welchen die Rippe vorsteht.

## Revendications

1. Machine pour séparer les pépins de la pulpe de raisins écrasés et d'autres fruits, comprenant une structure rigide (1) qui supporte au moins une paire d'arbres rotatifs (2, 3 ; 32, 33 ; 42, 43 ; 52, 53), sensiblement parallèles entre eux, des éléments (4, 5) pour induire lesdits arbres (2, 3 ; 32, 33 ; 42, 43 ; 52, 53) en rotation dans des directions opposées, une trémie ou analogue pour alimenter ladite paire d'arbres en raisins ou fruits analogues, un dispositif (10) d'évacuation des pépins séparés, un dispositif de collecte des peaux et pulpes de fruits, ledit dispositif étant placé au-dessous de ladite paire d'arbres (2, 3 ; 32, 33 ; 42, 43 ; 52,, 53), au moins une nervure en hélice (6, 7 ; 36, 37 ; 46, 47 ; 56) faisant saillie sur au moins une partie de la longueur d'au moins un des arbres de la paire, les faces opposées desdits deux arbres définissant ainsi au moins une ouverture (P), l'ouverture ou les ouvertures (P) ayant une largeur telle que les pépins ne passent tout juste pas au travers et permettant seulement à la pulpe avec la peau des fruits traités de passer, les pépins séparés étant évacués à une extrémité de ladite paire d'arbres (2, 3 ; 32, 33 ; 42, 43 ; 52, 53), grâce à la rotation des arbres.

2. Machine selon la revendication 1,
caractérisée en ce que ladite nervure (6, 7 ; 36, 37 ; 46, 47 ; 56) s'étend sur toute la longueur de l'arbre (2, 3 ; 32, 33 ; 42, 43 ; 52,) duquel elle fait saillie.

3. Machine selon les revendications 1 et 2,
caractérisée en ce que chacun des arbres de ladite paire d'arbres (2, 3 ; 32, 33 ; 42, 43 ;) possède au moins une desdites nervures (6, 7 ; 36, 37 ; 46, 47), la nervure (6, 36, 46) d'un arbre de la paire étant conçue pour être l'opposé de celle (7, 37, 47) de l'autre arbre.

4. Machine selon la revendication 3,
caractérisée en ce que la forme de la nervure (6, 36, 46) d'un des arbres (2, 32, 42) est sensiblement complémentaire à l'espace délimité entre deux tours successifs de la nervure (7, 37, 47) faisant saillie de l'autre arbre (3, 33, 43) dans lequel fait saillie ladite nervure.
